(19) Europäisches Patentamt
European Patent Office
Office européen des brevets

(11) **EP 2 676 449 B1**

(12) **EUROPÄISCHE PATENTSCHRIFT**

(45) Veröffentlichungstag und Bekanntmachung des Hinweises auf die Patenterteilung:
**27.12.2017 Patentblatt 2017/52**

(21) Anmeldenummer: **12724068.7**

(22) Anmeldetag: **17.01.2012**

(51) Int Cl.:
*H04N 13/02* *(2006.01)*     *H04N 13/00* *(2006.01)*

(86) Internationale Anmeldenummer:
**PCT/DE2012/000042**

(87) Internationale Veröffentlichungsnummer:
**WO 2012/097802 (26.07.2012 Gazette 2012/30)**

(54) **VERFAHREN UND VORRICHTUNG ZUR STEREOBASIS-ERWEITERUNG VON STEREOSKOPISCHEN BILDERN UND BILDFOLGEN**

METHOD AND DEVICE FOR STEREO BASE EXTENSION OF STEREOSCOPIC IMAGES AND IMAGE SEQUENCES

PROCÉDÉ ET DISPOSITIF D'ÉLARGISSEMENT DE LA BASE STÉRÉO D'IMAGES ET DE SUCCESSIONS D'IMAGES STÉRÉOSCOPIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2011 DE 102011008886**

(43) Veröffentlichungstag der Anmeldung:
**25.12.2013 Patentblatt 2013/52**

(73) Patentinhaber: **psHolix AG**
**4051 Basel (CH)**

(72) Erfinder: **NASKE, Rolf-Dieter**
**21255 Kakenstorf (DE)**

(74) Vertreter: **Müller Schupfner & Partner**
**Patent- und Rechtsanwaltspartnerschaft mbB**
**Schellerdamm 19**
**21079 Hamburg (DE)**

(56) Entgegenhaltungen:
WO-A2-2007/121970     US-A- 5 530 774

• HUANG H-C ET AL: "GENERATION OF MULTIVIEWPOINT VIDEO FROM STEREOSCOPIC VIDEO", IEEE TRANSACTIONS ON CONSUMER ELECTRONICS, IEEE SERVICE CENTER, NEW YORK, NY, US, Bd. 45, Nr. 1, 1. Februar 1999 (1999-02-01), Seiten 124-134, XP000888364, ISSN: 0098-3063, DOI: 10.1109/30.754427 in der Anmeldung erwähnt
• MANUEL LANG ET AL: "Nonlinear disparity mapping for stereoscopic 3D", ACM TRANSACTIONS ON GRAPHICS, Bd. 29, Nr. 4, 26. Juli 2010 (2010-07-26), Seite 1, XP55016814, ISSN: 0730-0301, DOI: 10.1145/1778765.1778812
• Humera Noor: "Chapter 3: View Synthesis using Image Extrapolation", INTELLIGENT VIEW EXTRAPOLATION FOR DYNAMIC SCENES, PHD Thesis, 1. Januar 2008 (2008-01-01), Seiten 39-71, XP55036131, Karachi, Pakistan Gefunden im Internet: URL:http://prr.hec.gov.pk/Thesis/19S.pdf [gefunden am 2012-08-22]

## Beschreibung

Die Erfindung betrifft ein Verfahren und eine Vorrichtung zur Verbesserung des Tiefeneindrucks von sterecskopischen Bilder und Bildfolgen. Diese Verbesserung kann entweder bei der Aufnahme in der Stereokamera erfolgen oder kann in eine stereoskopische Anzeigevorrichtung integriert sein.

Schon 1931 hat Lüscher [1] in seinem Artikel die Grundregeln der Stereoskopie festgehalten. Seine erste Regeln (a) besagt, dass das linke und rechte Teilbild eines Stereobildes die gleiche Sehwinkeldifferenz aufweisen sollten, d.h. dass die Stereobasis im Bereich von 65mm liegen sollte.

Aus technischen oder Design-Gründen wird diese Regel bei stereoskopischen Fotoapparaten oder Video-Recorder gelegentlich verletzt. Hier kann durch die hier beschriebene Stereobasis-Verbreiterung eine Anpassung erfolgen.

Wurde dieser Objektivabstand bei der Aufnahme eingehalten, so wird er bei 3D-brillengestützten oder autostereoskopischen Einzelbetrachter-Anzeigevorrichtungen erhalten und führt zu einem guten Tiefeneindruck.

Bei autostereoskopischen Mehrbetrachter-Anzeigevorrichtungen werden aber im Allgemeinen mehrere Zwischenperspektiven erzeugt, welche bei der Wahrnehmung durch die Betrachter zu einer verkleinerten Stereobasis führen. Dies widerspricht der von Lüscher aufgestellten Grundregel, dass "bei der Betrachtung die gleichen Sehwinkel (Stereobasis) wie bei der Aufnahme erhalten bleiben sollte". Auch hier kann die hier vorgestellte Stereobasis-Verbreiterung zu einer wesentlichen Verbesserung, d.h. einem realistischeren Tiefeneindruck fuhren.

Im Folgenden wird die Stereobasis-Verbreiterung zunächst, aber ohne Einschränkung der Allgemeingültigkeit, für eine autostereoskopische Mehrbetrachter-Anzeigevorrichtung beschrieben und anschließend exemplarisch für eine stereoskopische Aufnahmevorrichtung erweitert. Da die Prinzipien für beide Fälle identisch sind, ist dies zulässig.

## Aufgabenstellung

Bei 3D-brillenbestützten Anzeigevorrichtungen wird das von einer Stereokamera mit im Allgemeinen zwei Objektiven aufgenommene Stereobild durch Polarisations- oder Schutterverfahren dem jeweils entsprechenden linken oder rechten Auge des Betrachters zugeführt. Verfügen mehrere Betrachter über 3D-Brillen, so können alle Betrachter gleichzeitig einen guten 3D-Eindruck wahrnehmen. Der empfundene Augenabstand entspricht hierbei genau dem Abstand der beiden Kameraobjektive. Im Allgemeinen liegt dieser zum Erhalt der Natürlichkeit des Raumeindrucks bei ca. 65mm.

Bei autostereoskopischen Einzelbetrachter-Displays existiert vor dem Display genau eine optimale Betrachtungsposition, von der aus nur ein einziger Betrachter einen optimalen Tiefeneindruck wahrnehmen kann. Einige autostereoskopische Einzelbetrachter-Displays ermöglichen es, die Beweglichkeit zu erhöhen, indem sie durch sogenannte Head-Tracking-Systeme die Augenposition des Betrachters verfolgen und das dargestellte Stereobild an die jeweilige Position des Betrachtes anpassen können.

In [2] ist erstmals ein System beschrieben, bei dem mehrere Betrachter gleichzeitig beobachtet und verfolgt werden können.

Allen Systemen ist gemeinsam, dass jeweils nur zwei Kameraperspektiven benötigt werden, um einen optimalen Tiefeneindruck beim Betrachter zu erzeugen.

Für die Verwendung in einem Wohnzimmer oder einer öffentlichen Einrichtung ist diese Vorgehensweise jedoch nicht praktikabel. Mehrere Betrachter, im Allgemeinen möglichst viele, sollen gleichzeitig und ohne Bewegungseinschränkungen einen optimalen Tiefeneindruck wahrnehmen können.

Dies wird bei den bisher bekannten autostereoskopischen Mehrbetrachter-Anzeigevorrichtungen dadurch erreicht, dass zwischen den aufgenommenen Kameraperspektiven eine gewisse Anzahl von Zwischenperspektiven synthetisch erzeugt wird und diese dazu verwendet wird, vor der Anzeigevorrichtung eine Schar von Sehzonen zu erzeugen. In jeder dieser Sehzonen können sich ein oder mehrere Betrachter frei bewegen und einen Tiefeneindruck wahrnehmen.

In Abhängigkeit vom verwendeten optischen System besitzen diese Sehzonen eine gewisse Sehzonenbreite. Befindet sich der Betrachter am linken Rand der Sehzone, so wird sein linkes Auge die linke aufgenommene Kameraperspektive wahrnehmen. Befindet er sich am rechten Rand einer Sehzone, so wird sein rechtes Auge die rechte aufgenommene Kameraperspektive wahrnehmen. Im Allgemeinen liegt die Breite der Sehzone zwischen 300 und 600mm. Wandert der Betrachter von einer Sehzone in die nächste, so ergibt sich für eine kurze Strecke ein unscharfen Raumbild.

Da jedoch die Sehzone signifikant breiter ist als der Augenabstand (im Allgemeinen ca. 65mm), so ist klar, dass am linken Rand das rechte Auge eine Perspektive wahrnimmt, die wesentlich dichter an der linken aufgenommene Kameraperspektive liegt als an der rechten aufgenommenen Kameraperspektive. Dies führt dazu, dass der empfundene Augenabstand signifikant kleiner ist als der aufgenommene Kameraabstand, d.h. der Abstand der beiden Kameraobjektive. Das Ergebnis ist eine signifikante Reduzierung des Tiefeneindrucks bei autostereoskopischen Mehrbetrachter-Anzeigevorrichtungen. Sie ist umso stärker je breiter die Sehzone ist. Andererseits sollten aber die Sehzonen möglichst breit sein, um die Bewegungsfreiheit der Betrachter zu maximieren.

Die Reduzierung des Tiefeneindrucks stellt einen wesentlichen Nachteil dieser Anzeigevorrichtungen dar und soll durch die hier vorgelegte Offenlegungsschrift verringert und in bestimmten Fällen sogar vollständig eliminiert werden.

Dies wird durch die Erzeugung von virtuellen Perspektiven erreicht, welche sich in Blickrichtung der Kameraobjektive links und rechts von der linksten und rechtesten aufgenommen Kameraperspektive befinden und ist im Patentanspruch 1 niedergelegt. Es wird im Folgenden als Stereobasis-Erweiterung bezeichnet, da die Verbindungslinie zwischen der linksten und rechtesten aufgenommenen Kameraperspektive die Stereobasis darstellt und sich die erzeugten virtuellen Perspektiven auf der Verlängerung dieser aufgenommenen Stereobasis befinden.

Weiterhin wird eine Vorrichtung bestehend aus mindestens einer Verarbeitungseinheit und mindestens einer Speichereinheit beschrieben, welche die hier beschriebenen Verfahren ausführt.

## Stand der Technik

Stereobasis-Erweiterung sind bisher nur auf dem Fachgebiet der Akustik beschrieben worden. Dort ist die Literatur umfänglich veröffentlicht, kann jedoch für die hier beschriebene Aufgabenstellungen nicht herangezogen werden.

In [3] ist ein Verfahren beschrieben, bei dem ausgehend von einem zugeführten 2D-Bild und einer Tiefenkarte eine Vielzahl von Perspektiven rechts und links vom zugeführten 2D-Bild erzeugt werden. Nach der dort beschriebenen Vorgehensweise wird das 2D-Bild auf der Basis der Tiefenkarte deformiert. Es können sich dort aber keine optisch korrekten Perspektiven ergeben, da die Information über die Rechts- und Linksverdeckung fehlt. Für das hier beschriebene Verfahren ist jedoch zwingend ein zugeführtes Stereobild mit zwei oder mehr Perspektiven erforderlich. Nur so können Verdeckungen optisch korrekt in die verschiedenen synthetischen Perspektiven integriert werden.

In [4] werden auf der Basis einer Disparitätskarte eine Anzahl von Perspektiven erzeugt. Durch Verwendung einer Laufvariablen s, die bei einer Interpolation zwischen den Werten 0 und 1 liegt, werden aber auch Perspektiven extrapoliert, indem die Laufvariable Werte s < 0 oder s > 1 annehmen kann. Dies geschieht aber immer auf der Basis der gegebenen Disparitätskarte. Eine neue Disparitätskarte wird nicht erzeugt.

Andererseits sind zahlreiche Verfahren zur Erzeugung von Perspektiven zwischen einer zugeführten linken und einer rechten Kameraperspektive bekannt. Hier sei z.B. [5] genannt. All diese Verfahren betreffen nicht den Gegenstand der hier vorgelegten Patentanmeldung, da es nicht deren Ziel ist außerhalb der Stereobasis durch Berechnung einer neuen Disparitätskarte weitere Perspektiven zu erzeugen und diese Verfahren auch nicht in wünschenswerter Weise modifiziert werden können.

Aber auch extrapolierende Deformationsverfahren wie sie z.B. in [7] beschrieben sind können nicht zur Lösung der Aufgabenstellung herangezogen werden, da sie nicht die geometrischen Eigenschaften der Szene optisch korrekt bewahren und ergänzen können.

Außerdem wird dort von einer zeitlichen Reihenfolge ("..initial and final images...") ausgegangen. Ein wesentlicher Aspekt ist dort die Berechnung der Disparitätskarte selbst (3.4.2). Eine Extrapolation wird durch einfache Vergrößerung der Interpolationswerte über die Werte 0 und 1 hinaus durchgeführt (Gleichung 3.13). Dies wird auch als "wharphing" bezeichnet. Überlagerungen, die durch unterschiedliche Disparitäten von Pixeln entstehen, werden dort nicht szenengetreu verarbeitet, sondern hängen einfach von der Reihenfolge der verarbeiteten Pixel ab. Weiterhin werden Löcher nur durch die Verwendung von z-Buffern geschlossen. Diese werden in dem hier vorgestellten Verfahren nicht verwendet, da zwei Tiefenkarten nicht zur Verfügung stehen. Auch eine Interpolation, wie dort beschrieben, führt nicht zur Lösung. In dem hier beschriebenen Verfahren werden die Links- und Rechtsverdeckungen optisch korrekt aus den zugeführten Perspektiven eingefügt.

In [8] werden Techniken der Informationspyramide, bei der die zugeführten Perspektiven hierarchisch wie in einer Pyramide verkleinert werden und des "Optical Flows" wie er bei der Erzeugung von optisch korrekten zeitlichen Zwischenbildern zur Erhöhung der Bildwiederholrate verwendet werden. In [8] werden diese Verfahren zur iterativen Verfeinerung eines Disparitäts-Vektorfeldes unter Verwendung sogenannter Gradienten-Verfahren benutzt. Diese Verfahren und Gleichungen werden hier nicht verwendet. Wie die neuen Perspektiven erzeugt werden ist nicht genauer beschrieben, während dies in dem hier beschriebenen Verfahren durch den Zugriff auf die Indices der Bildpunkte der zugeführten linkesten und rechtesten Perspektive durchgeführt wird.

In [9] werden Operatoren θ definiert, durch welche eine Veränderung der Disparität vorgenommen wird. Bei dem hier beschriebenen Verfahren handelt es sich nicht um ein Verfahren, das durch einen linearen oder nicht-linearen Operator beschrieben werden kann, sodass sich kein Bezug zu [9] ergeben kann. Weiterhin werden dort keine neuen Perspektiven extrapoliert, sondern die zugeführten Perspektiven weiter verwendet. Bei Veränderung der Disparitäten führt dies eher zum sogenannten "Puppenstuben-Effekt".

**Beschreibung der Zeichnungen**

Fig. 1:	Umsetzung der Stereobasis einer Stereokamera innerhalb einer Sehzone bei bisher bekannten Mehrbetrachter-Anzeigevorrichtungen.
LC: Linke Kameraperspektive
RC: Rechte Kameraperspektive
1: Augenabstand des Betrachters
2: Sehzonenbreite an der Position des Betrachters
3: Abstand der Objektive der Stereokamera
4: Empfundener Augenabstand
5: Anzeigevorrichtung

Fig. 2:	Umsetzung der erweiterten Stereobasis einer Stereokamera innerhalb einer Sehzone durch Stereobasis-
Erweiterung.
LC: Linke reale Kameraperspektive
RC: Rechte reale Kameraperspektive
LE: Linke synthetische Kameraperspektive
RE: Rechte synthetische Kameraperspektive
1: Augenabstand des Betrachters
2: Sehzonenbreite an der Position des Betrachters
3: Abstand der Objektive der realen Stereokamera
4: Empfundener Augenabstand
5: Anzeigevorrichtung

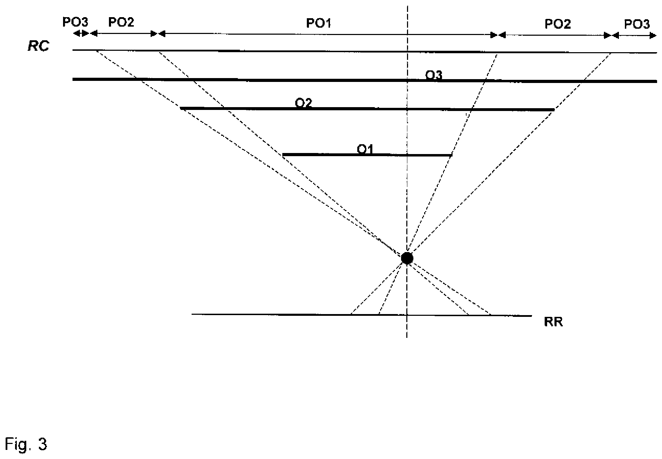

Fig.3:	Szene mit 3 Objekten vom rechten Objektiv einer Stereokamera aufgenommen.
RR: Rechte Retina
O1: Objekt 1
O2: Objekt 2
O3: Objekt 3
PO1: Projektionen der Objektsegmente von O1
PO2: Projektionen der Objektsegmente von O2
PO3: Projektionen der Objektsegmente von O3

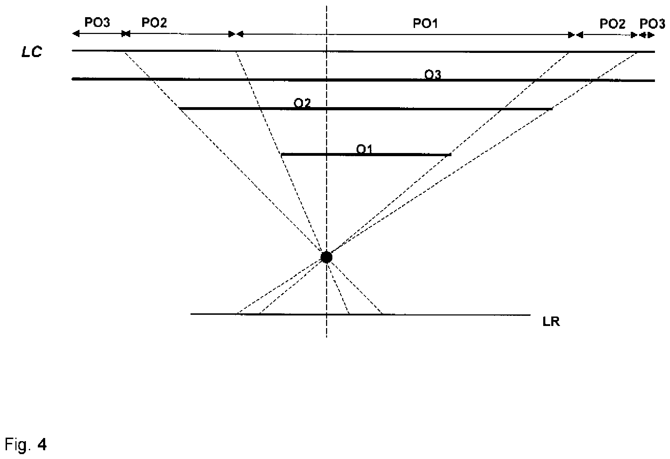

Fig.4:	Gleiche Szene wie bei Fig. 3, aufgenommen vom linken Objektiv der Stereokamera.
LR: Linke Retina
O1: Objekt 1
O2: Objekt 2
O3: Objekt 3
PO1: Projektionen der Objektsegmente von O1
PO2: Projektionen der Objektsegmente von O2
PO3: Projektionen der Objektsegmente von O3

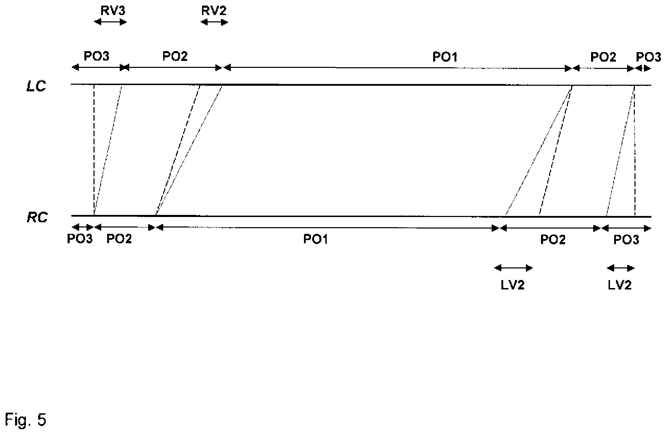

Fig. 5:	Darstellung der Disparitäten des linken Bildes LC aus Fig. 4 und des rechten Bildes RC aus Fig. 3.
*LC*: Linke Kameraperspektive
*RC*: Rechte Kameraperspektive
PO1: Projektionen der Objektsegmente von O1
PO2: Projektionen der Objektsegmente von O2
PO3: Projektionen der Objektsegmente von O3
RV2: Rechtsverdeckungen von Objekt 2
RV3: Rechtsverdeckungen von Objekt 3
LV2: Linksverdeckungen von Objekt 2
LV3: Linksverdeckungen von Objekt 3

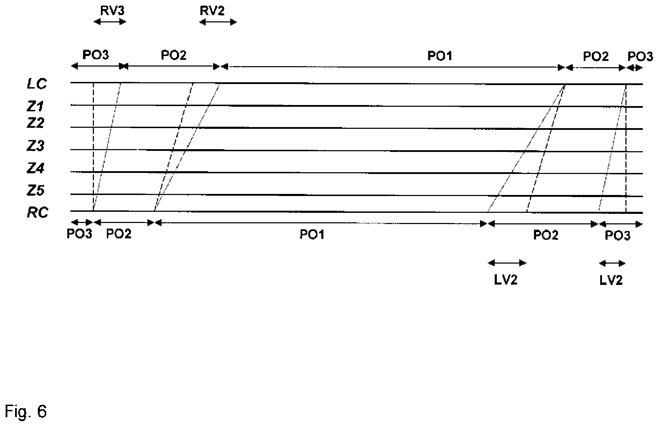

Fig.6:	Darstellung der Disparitäten aus Fig. 5 und ihre Abbildung auf verschiedene Zwischenperspektiven.
*LC:* Linke Kameraperspektive
*RC*: Rechte Kameraperspektive
Z1: Zwischenperspektive 1
Z2: Zwischenperspektive 2
Z3: Zwischenperspektive 3
Z4: Zwischenperspektive 4
Z5: Zwischenperspektive 5

PO1: Projektionen der Objektsegmente von O1
PO2: Projektionen der Objektsegmente von O2
PO3: Projektionen der Objektsegmente von O3
RV2: Rechtsverdeckungen von Objekt 2
RV3: Rechtsverdeckungen von Objekt 3
LV2: Linksverdeckungen von Objekt 2
LV3: Linksverdeckungen von Objekt 3

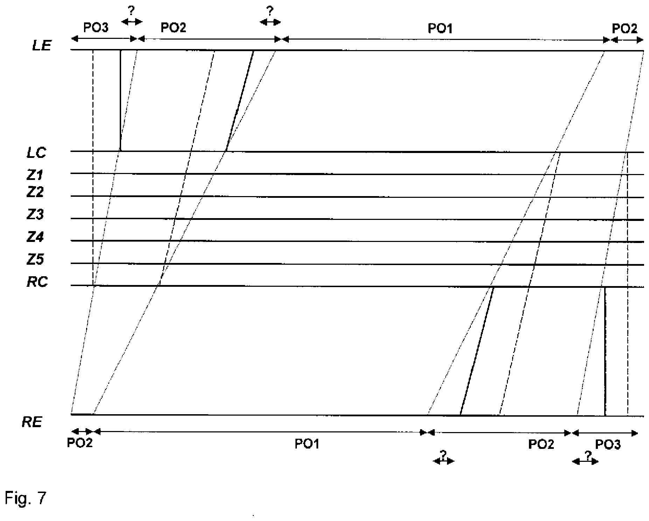

Fig. 7: Durchführung der Stereobasis-Erweiterung aus Fig. 5.
*LC*: Linke Kameraperspektive
*RC*: Rechte Kameraperspektive
Z1: Zwischenperspektive 1
Z2: Zwischenperspektive 2
Z3: Zwischenperspektive 3
Z4: Zwischenperspektive 4
Z5: Zwischenperspektive 5
*LE*: Linke Erweiterungsperspektive
*RE*: Rechte Erweiterungsperspektive
PO1: Projektionen der Objektsegmente von O1
PO2: Projektionen der Objektsegmente von O2
PO3: Projektionen der Objektsegmente von O3
?: Zu interpolierende neue Links- und Rechtverdeckungen

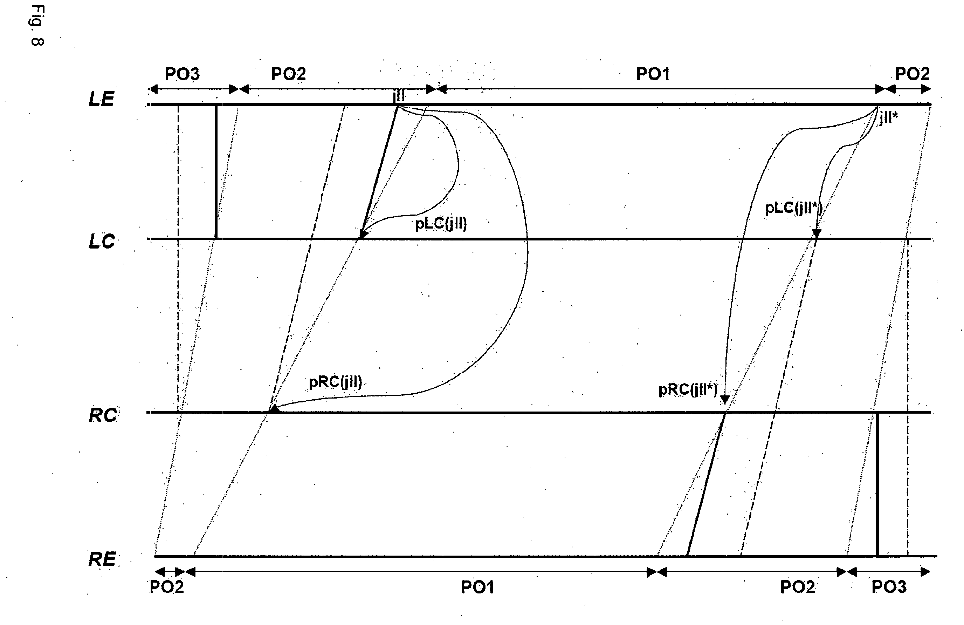

Fig. 8: Exemplarische Darstellung der Zeiger pLC und pRC.
*LC*: Linke Kameraperspektive
*RC*: Rechte Kameraperspektive
*LE*: Linke Erweiterungsperspektive
*RE*: Rechte Erweiterungsperspektive
PO1: Projektionen der Objektsegmente von O1
PO2: Projektionen der Objektsegmente von O2
PO3: Projektionen der Objektsegmente von O3
pLC(jll): Zeiger, auf den Bildpunkt an der Stelle jll der Erweiterungsperspektive LE der aufgenommenen Kameraperspektive LC
pRC(jll): Zeiger, auf den Bildpunkt an der Stelle jll der Erweiterungsperspektive LE der aufgenommenen Kameraperspektive RC
pLC(jll*): Zeiger, auf den Bildpunkt an der Stelle jll* der Erweiterungsperspektive LE der aufgenommenen Kameraperspektive LC
pRC(jll*): Zeiger, auf den Bildpunkt an der Stelle jll* der Erweiterungsperspektive LE der aufgenommenen Kameraperspektive RC

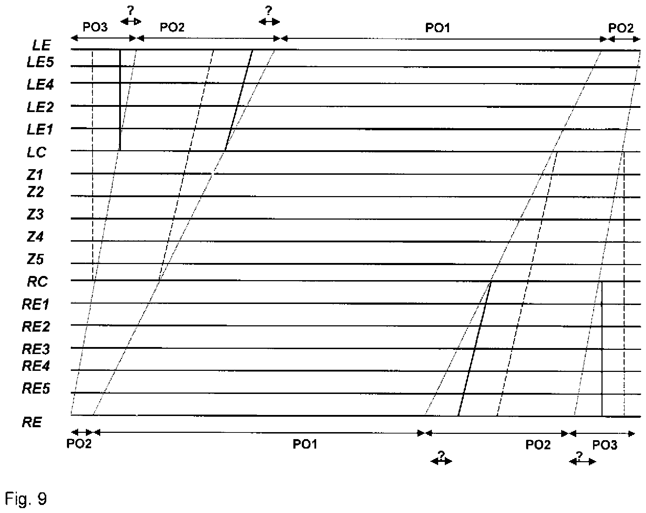

Fig. 9: Erzeugung weiterer Zwischenperspektiven außerhalb der Stereobasis von LC nach RC.
*LC*: Linke Kameraperspektive
*RC*: Rechte Kameraperspektive
Z1: Zwischenperspektive 1
Z2: Zwischenperspektive 2
Z3: Zwischenperspektive 3
Z4: Zwischenperspektive 4
Z5: Zwischenperspektive 5
*LE*: Linke Erweiterungsperspektive
*RE*: Rechte Erweiterungsperspektive
PO1: Projektionen der Objektsegmente von O1
PO2: Projektionen der Objektsegmente von O2
PO3: Projektionen der Objektsegmente von O3
?: Zu interpolierende neue Links- und Rechtverdeckungen
LE1: Linke Erweiterungsperspektive 1
LE2: Linke Erweiterungsperspektive 2
LE3: Linke Erweiterungsperspektive 3
LE4: Linke Erweiterungsperspektive 4
LE5: Linke Erweiterungsperspektive 5
RE1: Rechte Erweiterungsperspektive 1
RE2: Rechte Erweiterungsperspektive 2

RE3: Rechte Erweiterungsperspektive 3
RE4: Rechte Erweiterungsperspektive 4
RE5: Rechte Erweiterungsperspektive 5

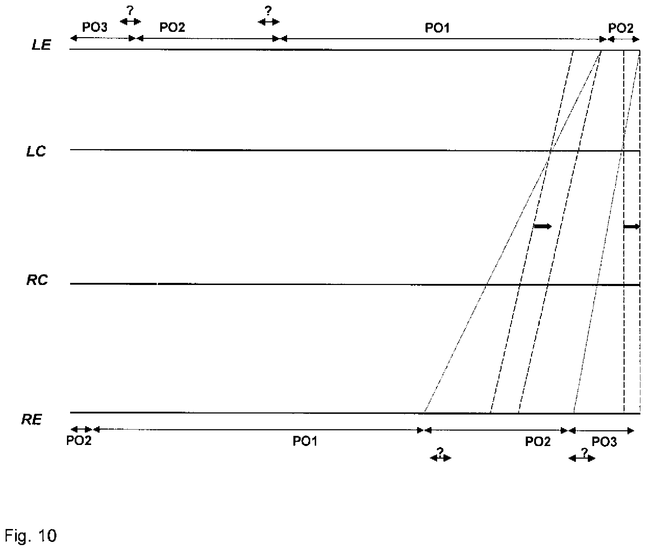

Fig. 10: Möglichkeiten der Linksverdeckung und ihre Behandlung.
*LC*: Linke Kameraperspektive
*RC*: Rechte Kameraperspektive
*LE*: Linke Erweiterungsperspektive
*RE*: Rechte Erweiterungsperspektive
PO1: Projektionen der Objektsegmente von O1
PO2: Projektionen der Objektsegmente von O2
PO3: Projektionen der Objektsegmente von O3
?: Zu interpolierende neue Links- und Rechtverdeckungen

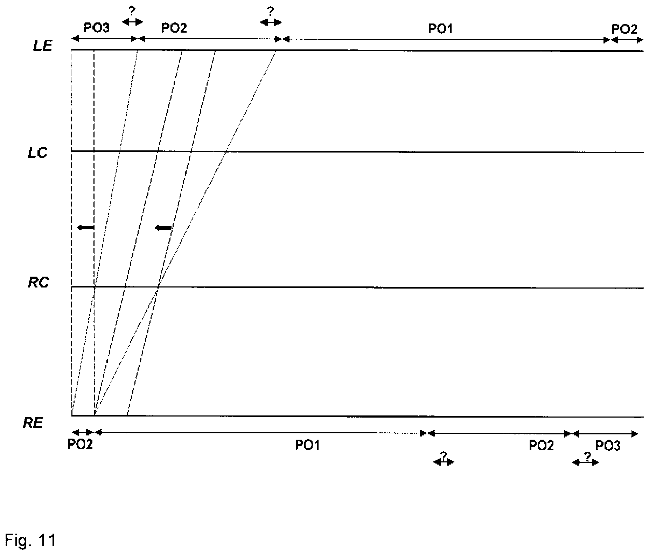

Fig. 11: Möglichkeiten der Rechtsverdeckung und ihre Behandlung.
*LC*: Linke Kameraperspektive
*RC*: Rechte Kameraperspektive
*LE*: Linke Erweiterungsperspektive
*RE:* Rechte Erweiterungsperspektive
PO1: Projektionen der Objektsegmente von O1
PO2: Projektionen der Objektsegmente von O2
PO3: Projektionen der Objektsegmente von O3
?: Zu interpolierende neue Links- und Rechtverdeckungen

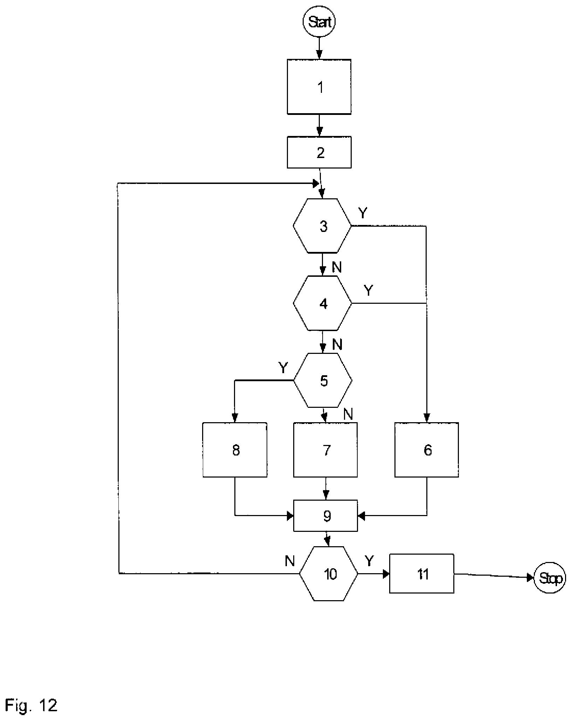

Fig. 12: Übersichtsflussdiagramm
1: LE_Wohin, p LC und pRC initialisieren
2: jll := Anfang
3: Wohin(jll) = -1?
Y: Ja
N: Nein
4: Wohin(jll) - Wohin(jll-1) = 0 ?
5: | Wohin(jll) - Wohin(jll-1) | > 1 ?
6: Bearbeitung Rechtsverdeckung
7: Erweiterung direkt bearbeiten
8: Bearbeitung Linksverdeckung
9: jll = jll +1
10: jll > Ende?
11: LE_Wohin nach Wohin übertragen

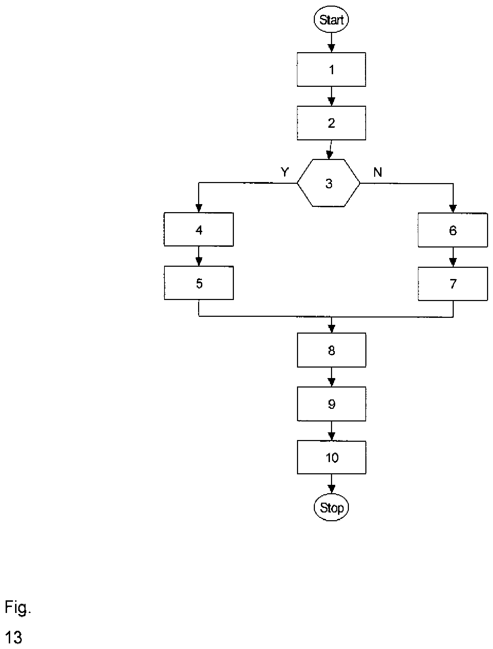

Fig. 13: Flussdiagramm zu "Bearbeitung Rechtsverdeckung"
1: Disparität an der linken Kante ermitteln
2: Disparität an der rechten Kante ermitteln
3: Linke Kante vorn ?
Y: Ja
N: Nein
4: Erweiterung an der linken Kante ermitteln
5: Nach rechts gehen und Erweiterung an der rechten Kante ermitteln
6: Erweiterung an der rechten Kante ermitteln
7: Nach links gehen und Erweiterung an der linken Kante ermitteln
8: Linke Grenze setzen
9: Rechte Grenze setzen
10: Von links LE_Wohin bis jll mit -1 auffüllen

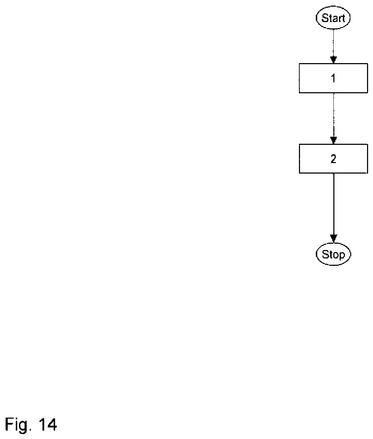

Fig. 14: Flussdiagramm zu "Bearbeitung Linksverdeckung"
1: Rechte Grenze suchen, für welche erstmals die Erweiterung größer als die linke Grenze ist, da diese korrekt gesetzt wurde.
2: Rechte Grenze setzen

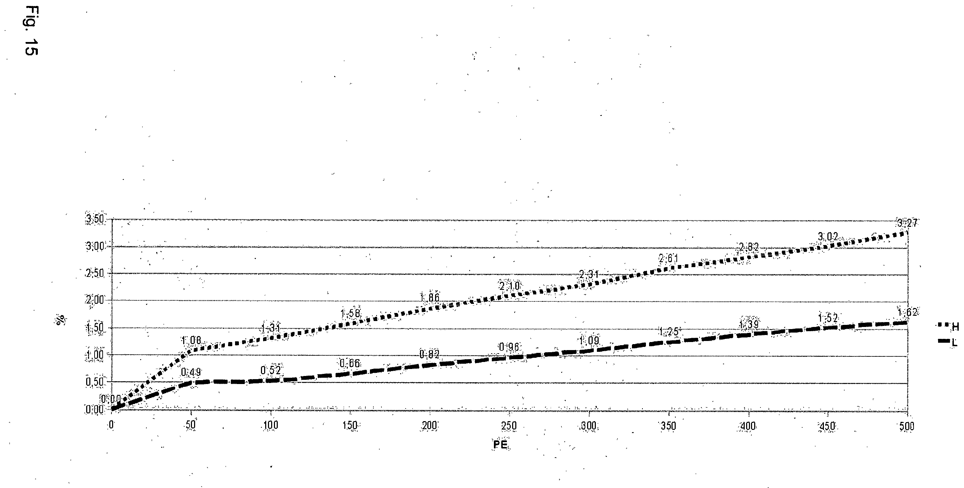

Fig. 15: Statistik zur Prozentzahl der zu interpolierenden Pixel in Abhängigkeit von der prozentualen Erweiterung und der Komplexität der analysierten Szene
PE: Prozentual Erweiterung in %
%: Prozentzahl der zu interpolierenden Pixel eines HD-Stereobildes
H: Szene mit hoher Komplexität
L: Szene mit geringer Komplexität

**Beschreibung der verwendeten Abkürzungen**

| | |
|---|---|
| AE: | Aus dem zugeführten Abstand zweier Objektive einer Stereokamera erzeugter erweiterter Abstand der Objektive. |
| AA: | Augenabstand des Betrachters. |
| AB: | Abstand der Perspektiven, welche von der Anzeigevorrichtung in das linke und rechte Auge des Betrachters projiziert werden; "Empfundener Augenabstand"; empfundene Stereobasis. |
| SZ: | Breite der Sehzone; Sehzonenbreite. |
| KA: | Abstand der Objektive der Stereokamera; aufgenommene Stereobasisbreite. |
| N: | Anzahl der zugeführten Kameraperspektiven. |
| M: | Anzahl der erzeugten Erweiterungsperspektiven. |
| DU: | Untere Grenze, der auf der Anzeigevorrichtung darstellbaren Disparität, welche für einen optimalen Tiefeneindruck nicht unterschritten werden sollte. |
| DO: | Obere Grenze, der auf der Anzeigevorrichtung darstellbaren Disparität, welche für einen optimalen Tiefeneindruck nicht überschritten werden sollte. |
| F: | Erweiterungsfaktor |
| PE: | Prozentuale Erweiterung der maximalen Disparität des zugeführten Stereobildes. |
| LC: | Linkeste zugeführte Kameraperspektive. |
| PC: | Rechteste zugeführte Kameraperspektive. |
| LE: | Linkeste Erweiterungsperspektive links von LC. |
| RE: | Rechteste Erweiterungsperspektive rechts von RC. |
| pLC: | Feld von Zeigern von LE auf die jeweils zu verwendenden aufgenommenen Pixel von LC. |
| pRC: | Feld von Zeigern von LE auf die jeweils zu verwendenden aufgenommenen Pixel von RC. |
| Wohin: | Feld von zugeführten oder berechneten Disparitäten; i-te Zeile der Disparitätsmatrix. |
| LE_Wohin: | Feld von berechneten erweiterten Disparitäten. |
| K: | Anzahl der Zeilen des zugeführten Stereobildes. |
| Dmax: | Maximale Disparität im zugeführten Stereobild. |
| ZW: | Anzahl der erzeugten Zwischenperspektiven. |
| DSTEP: | Größe der Schrittweite zwischen zwei Zwischenperspektiven. |
| NrP: | Anzahl der anzuzeigenden Perspektiven. |
| jll: | Eine bestimmte Pixelposition in der Zeile i. |
| leftCapture: | Nummer derjenigen Perspektive, bei der LC angezeigt werden soll. |
| rightCapture: | Nummer, derjenigen Perspektive, bei der RC angezeigt werden soll. |
| nrSegments: | Anzahl der Pixel pro Perspektivenschritt bei gegebener Disparität eines Pixels jll. |
| leftBorder: | Pixelposition am linken Rand einer Verdeckung |
| rightBorder: | Pixelposition am rechten Rand einer Verdeckung |
| Anfang: | Erste zu bearbeitende Pixelposition einer Zeile |
| Ende: | Letzte zu bearbeitende Pixelposition einer Zeile |
| LE_Wohin_leftBorder : | Disparität bei leftBorder, wenn diese bis zur maximalen rechten Stereobasis-Erweiterung RE fortgesetzt wird. |
| LE_Wohin_rightBorder: : | Disparität bei rightBorder, wenn diese bis zur maximalen rechten Stereobasis-Erweiterung RE fortgesetzt wird. |

**Beschreibung im Detail**

Im Folgenden werden die Verfahrenschritte dieser Offenlegung im Detail erläutert.

Zur Vereinfachung der Beschreibung, jedoch ohne Einschränkung der Allgemeingültigkeit, sollen die folgenden Annahmen zugrundegelegt werden:

1. Die Anzahl N der zugeführten Kameraperspektiven ist 2. Ist sie größer, so werden gewisse der zugeführten Kameraperspektiven als Zwischenperspektiven verwendet.

2. Das zugeführte Stereobild befindet sich in Stereonormalform, sodass alle Berechnungen zeilenweise durchgeführt werden können. Ist dies nicht der Fall, so wird entweder eine Rektifizierung vorgeschaltet oder eine Indizierung entlang der Epipolaren durchgeführt.

3. Neben dem zugeführten Stereobild steht eine Disparitätskarte zur Verfügung. Sie wurde entweder mit zugeführt oder in einem Vorverarbeitungsschritt berechnet. Wohin bezeichnet in dieser Disparitätskarte die i-te Zeile.

4. Wenn im Folgenden von Sehzone gesprochen wird, so sind immer alle Sehzonen parallel und gleichzeitig gemeint.

Wie vorher dargestellt, ist es das Ziel des hier beschriebenen Verfahrens, auf der Basis eines zugeführten Stereobild mit mindestens N >= 2 Kameraperspektiven eine Erweiterung der von der Stereokamera verwendeten Stereobasis KA durchzuführen, um bei einer Mehrbetrachter-Anzeigevorrichtung einen besseren Tiefeneindruck innerhalb der durch die Optik der Vorrichtung definierten Sehzonen zu erreichen. Bei allen autostereoskopischen Mehrbetrachter-Anzeigevorrichtung sorgt die Optik des Systems dafür, dass innerhalb jeder Sehzone die linke zugeführte Kameraperspektive am linken Rand der Sehzone und die rechte Kameraperspektive am rechten Rand der Sehzone wahrgenommen wird. Dies ist an allen Orten vor der Anzeigevorrichtung der Fall. Ist die Breite der Sehzone SZ größer als der Augenabstand AA des Betrachters, so kann sich der Betrachter innerhalb der Sehzone frei bewegen. Eine maximal Sehzonenbreite SZ wäre daher wünschenswert.

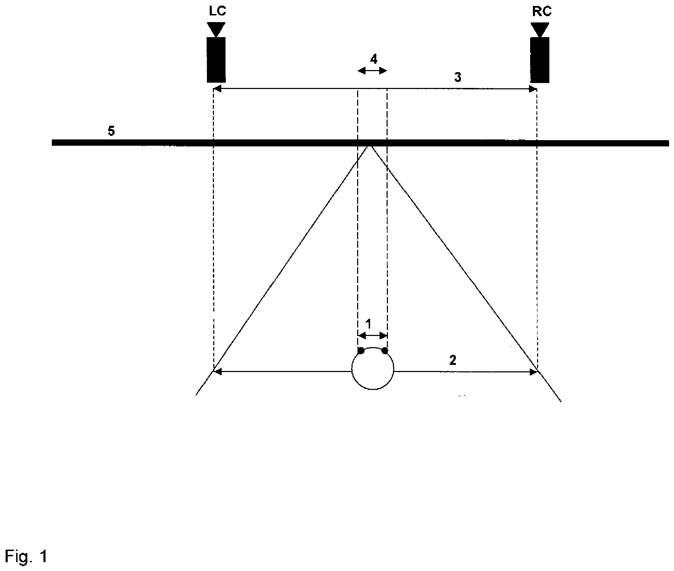

In Abhängigkeit vom Augenabstand AA des Betrachters werden immer jeweils zwei unterschiedliche Zwischenperspektiven auf sein linkes und rechtes Auge projiziert (Fig. 1). Der Tiefeneindruck, den der Betrachter dabei empfindet, hängt vom Abstand der beiden projizierten Perspektiven ab (Element 4 in Fig. 1). Sind sie weit auseinander, so hat der Betrachter einen starken Tiefeneindruck. Ist der Abstand klein, so ist der Tiefeneindruck geringer. Im Extremfall, wenn der Perspektivenabstand gleich 0 ist, sieht man nur noch ein 2D-Bild. Ist der Perspektivenabstand maximal, d.h. das linke Auge sieht die linke Kameraperspektive und das rechte Auge die rechte Perspektive, dann ist auch der Tiefeneindruck maximal, wie z. B. bei allen 3D-brillenbasierten Displays.

Das Ziel liegt also darin, dass bei gegebener Sehzonenbreite SZ und gegebenem Augenabstand AA die beiden projizierten Perspektiven möglichst weit auseinander liegen.

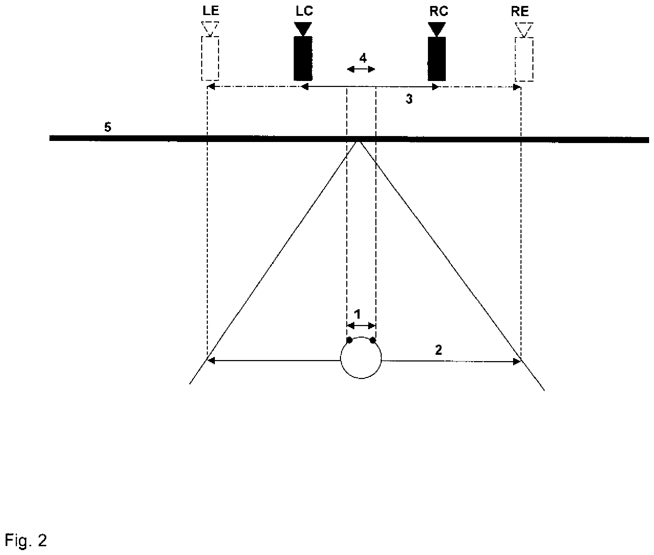

Dies wird dadurch erreicht, dass gemäß dieser Offenlegung virtuelle Erweiterungsperspektiven LE und RE synthetisiert werden, welche jeweils in Blickrichtung der Stereokamera links und rechts von den zugeführten Kameraperspektiven LC und RC an den linken und rechten Rand der Sehzone projiziert werden (Fig. 2). Gemäß Fig. 2 befinden sich diese Erweiterungsperspektiven LE und RE auf der Verlängerung der Stereobasis 3 der linken und rechten Kameraperspektive LC und RC. Bezeichnet man mit AB den Abstand der zwei Perspektiven, welche an einer beliebigen Position innerhalb der Sehzone jeweils auf das linke und rechte Auge projiziert werden, so ergibt sich dieser "empfundene Augenabstand" AB als

$$AB = AA * KA / SZ. \tag{1}$$

An einem realistischen Beispiel mit KA = 65mm, SZ = 300mm und AA = 63mm, ergibt sich ein empfundener Augenabstand AB von 13,7mm.

Erweitert man jedoch die Stereobasis wie später beschrieben um z.B. PE = 200%, so ergibt dies für die linke Erweiterungsperspektive LE eine Erweiterung um 100%, d.h. 65mm weiter nach links, und für die rechte Erweiterungsperspektive RE eine Erweiterung um ebenfalls 100%, d.h. 65mm, weiter nach rechts auf der Stereobasis 3. In diesem Fall ergibt sich

$$AB = 63 * (3 *65) / 300 = 40,9mm. \tag{2}$$

Der empfundene Tiefeneindruck ist in diesem Beispiel fast identisch mit dem realistischen Tiefeneindruck von 65mm.

Bezeichnet man nun mit F den Erweiterungsfaktor, um den die aufgenommene Stereobasis KA erweitert wird, so kann (1) verallgemeinert werden zu

$$AB = F * AA * KA / SZ \tag{3}$$

Dies ergibt:

$$F = AB * SZ / ( KA * AA), \tag{4}$$

wenn man bei gegebenem Augenabstand AA, gegenebener Sehzonenbreite SZ und aufgenommener Stereobasisbreite KA den Erweiterungsfaktor F in Abhängigkeit von der gewünschten empfundenen Stereobasisbreite AB bestimmen will.

Möchte man einen realistischen Tiefeneindruck erzeugen, d. h. AB = AA, ergibt sich

$$F = SZ / KA. \qquad (5)$$

Auf den Abstand KA der Kameraobjektive hat man i.A. keinen Einfluss. Er liegt mit großer Wahrscheinlichkeit bei ca. 65mm. Daher kann man in der Praxis von einem Vergrößerungsfaktor F

$$F = 0{,}0154 * SZ \qquad (6)$$

ausgehen. Bei einer gegebenen Sehzonenbreite SZ = 600mm, ergibt sich ein Erweiterungsfaktor F = 9,2. Mit

$$F = 1 + PE / 100 \qquad (7)$$

ergibt sich hieraus eine prozentuale Erweiterung PE um ca. 400%, d.h. 260mm, jeweils nach rechts und links.

In einer ersten Ausführungsform wird nun beschrieben wie diese Stereobasis-Erweiterung auf der Basis der zugeführten Disparitätskarte vorgenommen wird. Hierzu ist in Fig. 3 und Fig. 4 exemplarisch eine Szene mit drei Objekten O1, O2 und O3 dargestellt. Im unteren Bereich jeder Zeichnung ist die jeweilige Projektion auf die Retina des rechten (Fig. 3) und des linken (Fig. 4) Auge des Betrachters, bzw. in eine Kameralinse dargestellt. Es ist hierbei eine einzelne Zeile i eines rechten (Fig. 3) und eines linken (Fig. 4) Auges dargestellt. Im oberen Bereich ist jeweils die Projektion nach Vergrößerung und Spiegelung dargestellt wie sie in einer digitalen Aufnahme gespeichert ist und wie sie dem hier beschriebenen Verfahren zugeführt wird.

In Fig. 5 ist die zugehörige Disparität durch die entsprechenden Verbindungslinien verdeutlicht. Es werden dort auch die Rechtsverdeckungsbereiche RV2 und RV3 der Objekte O2 und O3 angezeigt.

Auf einer virtuellen Kamerafahrt von LC nach RC werden Zwischenperspektiven in der Weise erzeugt, dass man für korrespondierende Pixel die Disparität äquidistant in gleiche Abschnitte einteilt (Fig. 6). Für eine virtuelle Kamerafahrt von RC nach LC gilt natürlich das Entsprechende.

Im Feld Wohin ist gemäß Definition der Disparitätskarte für jeden Pixel jll der linken Kameraperspektive LC angegeben mit welchem Pixel Wohin(jll) er in der rechten Kameraperspektive RC korrespondiert.

Will man nun eine Stereobasis-Erweiterung durchführen, so kann man sich die in Fig. 5 dargestellten Korrespondenzlinien über LC und RC hinaus verlängert vorstellen. Dies entspricht einer linearen Verlängerung der Stereobasis KA über LC und RC hinaus (Fig. 7). Eine solche Vorgehensweise ist zulässig, da auch die Erzeugung der Zwischenperspektiven zwischen LC und RC einer linearen Kamerafahrt zwischen LC und RC entspricht. Man würde dieser Kamerafahrt gewissermaßen über LC und RC hinaus fortsetzen.

Es ergeben sich dabei aber gewisse Probleme, für die eine Lösung gefunden werden muss:

1. Berechnung der neuen Perspektivpositionen für LC und RC innerhalb einer Sehzone,
2. Berechnung der Pixel von LE und RE,
3. Festlegung, welche Disparitäten im Kollisionsfall in der Erweiterung weitergeführt werden sollen,
4. Verfahren zur Interpolation der Bildbereiche, welche durch die Erweiterung der Stereobasis sichtbar werden.

**1. Berechnung der neuen Perspektivpositionen von LC und RC innerhalb einer Sehzone**

Sollen NrP Perspektiven angezeigt werden, so wird bei den bisherigen Anzeigevorrichtungen LC für Perspektive 0 verwendet und RC für Perspektive NrP-1.

Dies geschieht bei einer Stereobasis-Erweiterung nicht und wird wie folgt verallgemeinert:

Sei leftCapture die Nummer der Perspektive, bei der LC angezeigt werden soll, dann gilt:

$$LeftCapture := (NrP - 1) * (1 - 1 / F)/2 \text{ und} \qquad (8)$$

$$RightCapture := leftCapture + (NrP - 1) / F. \qquad (9)$$

Beträgt die prozentuale Erweiterung PE = 0%, so ist F = 1 und es ist leftCapture = 0, sowie rightCapture = NrP -1. Diese Verallgemeinerung ist daher rückwärts kompatibel mit der bisher verwendeten Vorgehensweise.

Wählt man andererseits z. B. PE = 200%, so würde die Stereobasis links und rechts jeweils um 100% erweitert werden, d. h. LC und RC würden jeweils um 1/3 nach innen rücken. Die Formeln (8) und (9) ergeben in diesem Fall leftcapture = 1/3*(NrP - 1) und rightCapture = 2/3 * (NrP - 1), was genau den Erwartungen entspricht.

## 2. Berechnung der Pixel von LE und RE

Soll bisher an der Position jll die linke Perspektive angezeigt werden, so greift man auf den Pixel LC(jll) zu. Soll der zugehörige Pixel aus der rechten Perspektive angezeigt werden, so greift man auf den Pixel RC(Wohin(jll)) zu.

Dies geht bei einer Stereobasis-Erweiterung nicht, da LE(jll) und RE(Wohin(jll)) nicht definiert sind. Es wird daher ein Feld pLC eingeführt, in welchem die Position des Pixels von LC gespeichert ist, auf die von LE aus zugegriffen werden soll, wenn die linke Perspektive anzuzeigen ist. Ebenso wird ein Feld pRC, in welchem die Position des Pixels von RC gespeichert ist, auf die von LE aus in Abhängigkeit von der dortigen Disparität zugegriffen werden soll, wenn die rechte Perspektive angezeigt werden soll.

Zu Verfahrensbeginn wird

$$pLC(jll) := jll \text{ und} \qquad (10)$$

$$pRC(jll) := Wohin(jll)$$

gesetzt.

Wird jetzt an einer Stelle jll ein Pixel aus LE oder RE benötigt, so gilt

$$LE(jll) \qquad := LC(pLC(jll)) \text{ und} \qquad (11)$$

$$RE(Wohin(jll)) := RC(pRC(jll)). \qquad (12)$$

(siehe Fig. 8) Dadurch ist das hier beschriebene Verfahren im Falle einer prozentualen Erweiterung PE =0% rückwärts kompatibel mit der alten Vorgehensweise.

## 3. Festlegung, welche Disparität im Kollisionsfall in der Erweiterung weitergeführt werden soll

Im Fall von Links- und Rechtsverdeckungen kann es jedoch an den Rändern dieser Verdeckungsbereiche dadurch zu Kollisionen kommen, dass sich die verlängerte Disparität an den Rändern der Bereiche in der Verlängerung überschneiden. Beispiele hierfür sind in Fig. 10 für die Linksverdeckungen und in Fig. 11 für die Rechtsverdeckungen dargestellt. Dabei muss letztendlich die Frage beantwortet werden, welches Objekt im Vordergrund ist. Seine Disparitäten werden fortgesetzt, während die Disparitäten des anderen Objektes zu einer neuen Verdeckung bzw. einer Vergrößerung einer existierenden Verdeckung führen.

Die Antwort hierfür gibt die Tatsache, dass im Fall einer Stereonormalform, wie vorausgesetzt, die Disparität umgekehrt proportional ist zum Abstand des Objektes von der Stereokamera. Objekte, deren Disparität größer ist, sind im Vordergrund vor anderen Objekten, weil sie sich dichter an der Stereokamera befinden und das andere Objekt verdecken werden.

Prüft man also bei einer Kollision die Disparitäten an den Rändern des Bereiches, so werden die Pixel, deren Disparität größer ist, weitergeführt, während die anderen Pixel in eine Verdeckung führen (siehe Fig. 10 und Fig. 11).

## 4. Verfahren zur Interpolation der Bildbereiche, welche durch die Erweiterung der Stereobasis sichtbar werden.

Durch die Erweiterung der Stereobasis nach rechts und links werden Bereiche in der Szene sichtbar, für welche keine Bildinformation vorhanden ist, da sie bisher verdeckt waren. Man kann weiter hinter vordere Objekte schauen, z.B. Objekt O3 in Fig.4. In Fig. 7 sind solche Bereiche mit "?" gekennzeichnet.

In der hier vorgelegten Patentschrift soll so vorgegangen werden, dass der letzte sichtbare Pixel repliziert wird.

Bei Linksverdeckungen wird der linkeste Pixel der angrenzenden Linksverdeckung wiederholt. Bei Rechtsverdeckungen der rechteste Pixel der angrenzenden Rechtsverdeckung. Eine allgemeine Glättung über benachbarte Pixel findet nicht statt, da dies zu einer Verwaschung der Objektkanten führen würde, welche den 3D-Eindruck reduziert.

Allgemein ist hierbei zu berücksichtigen, dass die damit verbundene Ungenauigkeit nicht so groß ist wie zu vermuten wäre, da nur diejenigen Pixel interpoliert werden müssen, welche auch tatsächlich zur Anzeige kommen. Untersuchungen haben bei HD-aufgelösten Stereobildern ergeben, dass selbst bei komplexen Szenen und einer prozentualen Stereobasis-Erweiterung PE von 500% der Prozentsatz der interpolierten Pixel bei weniger als 4% liegt. Bei einfachen Szenen beträgt der Prozentsatz der interpolierten Pixel i.A. weniger als 2%. Andererseits ist die Verbesserung des empfundenen Tiefeneindrucks beträchtlich gegenüber den bisher angezeigten Stereobildern.

In Fig. 15 ist die Entwicklung der Anzahl der zu interpolierenden Pixel in % der Gesamtpixel des Bildes bei Szenen mit hoher Komplexität (H) und Szenen mit geringer Komplexität (L) für eine prozentuale Stereobasis-Erweiterung von 0% bis 500% dargestellt.

Damit sind die Lösungen für die oben beschriebenen Probleme gefunden.

In Fig. 12 ist der Rahmen der dieser Patentschrift zugrunde liegenden Vorgehensweise als Flussdiagramm dargestellt. Hierbei wird wie folgt vorgegangen:

Zunächst werden das Feld LE_Wohin mit -2, sowie pLC und pRC wie vorher beschrieben vorbesetzt.

Dann wird die Schleifenvariable jll, welche über alle Pixel einer Zeile laufen soll, auf den Anfangswert Anfang gesetzt.

Mit der Abfrage Wohin(jll) = -1 wird geprüft, ob sich bei jll eine Rechtsverdeckung befindet. Wird sie mit "ja" beantwortet, so wird mit "Bearbeitung Rechtsverdeckung" fortgefahren. Wird sie mit "nein" beantwortet, wird geprüft, ob sich mit Wohin(jll) - Wohin(jll-1) = 0 eine neue Rechtsverdeckung in der Erweiterung ergibt. Wird sie mit "ja" beantwortet, so wird mit "Bearbeitung Rechtsverdeckung" fortgefahren. Wird sie mit "nein" beantwortet, wird geprüft ob

$$| \text{Wohin}(jll) - \text{Wohin}(jll-1) | > 1 \qquad (15)$$

gilt.

Ist dies der Fall, so wird mit "Bearbeitung Linksverdeckung" fortgefahren. Ist dies nicht der Fall, so wird mit "Erweiterung direkt berechnen" fortgefahren. In allen drei Fällen wird danach jll = jll +1 inkrementiert und geprüft, ob jll > Ende ist. Rechts- und Linksverdeckung sind jetzt identifiziert und können in den Teilschritten "Bearbeitung Rechtsverdeckung" und "Bearbeitung Linksverdeckung" optisch korrekt bewahrt und ergänzt werden.

Ist dies der Fall, so wird LE_Wohin nach Wohin übertragen. Danach kann das gewählte Verfahren der Bildsynthese auf der Basis der neu gesetzten Disparität, jedoch unter Verwendung der neuen Zeiger pLC und pRC, durchgeführt werden. Im Folgenden wird der Schritt "Bearbeitung Rechtsverdeckung" genauer beschrieben. Dieser ist in Fig. 13 als Flussdiagramm dargestellt. Wurde Wohin(jll) = -1 oder Wohin(jll) - Wohin(jll - 1) = 0 erkannt, so wird zunächst die Disparität an der linken Kante des Bereiches ermittelt. Die linke Kante ist derjenige Pixelindex leftBorder, für den Wohin(leftBorder) > 0 ist im Fall von Wohin(jll) = -1 oder es ist leftBorder = jll - 1, wenn Wohin(jll) und Wohin(jll-1) auf den selben Pixel in der rechten Kameraperspektive RC zeigen.

Das gleiche wird an der rechten Kante durchgeführt mit rightBorder = jll oder wenn erstmals Wohin(rightBorder) > 0 gilt.

Sodann wird geprüft, ob die Disparität an der linken Kante leftBorder größer ist als an der rechten Kante rightBorder. Ist dies der Fall, d.h.

$$\text{Disparität}(\text{leftBorder}) > \text{Disparität}(\text{rightBorder}), \qquad (16)$$

so ist das Objekt an der linken Kante im Vordergrund. Dazu wird zunächst die Disparität bei leftBorder bis zur maximalen rechten Stereobasis-Erweiterung RE fortgesetzt. Es ergibt sich ein Wert LE_Wohin_leftBorder. In gleicher Weise wird LE_Wohin_rightBorder ermittelt. Nun wird rightBorder so lange inkrementiert bis LE_Wohin_leftBorder <= LE_Wohin_rightBorder gilt. An dieser Stelle ist die Rechtsverdeckung auch in der Erweiterung beendet.

Ist jedoch (16) nicht erfüllt, so ist das Objekt an der rechten Kante im Vordergrund. In diesem Fall wird ähnlich wie oben zunächst die Disparität bei rightBorder bis zur maximalen rechten Stereobasis-Erweiterung RE fortgesetzt. Es ergibt sich auch hier LE_Wohin_rightBorder.

Nun wird LE_Wohin_leftBorder neu ermittelt. Dazu wird leftBorder so lange dekrementiert bis ebenfalls

$$\text{LE\_Wohin\_leftBorder} <= \text{LE\_Wohin\_rightBorder} \qquad (17)$$

gilt. An dieser Stelle ist die Rechtsverdeckung ebenfalls in der Erweiterung beendet.

Nachdem leftBorder und rightBorder festgestellt sind, werden die Fortsetzungen von leftBorder und rightBorder nach LE links ermittelt. Hierzu wird zunächst

$$\text{LeftStep} := (\text{Wohin}(\text{leftBorder}) - \text{leftBorder})/\text{NrSegments} \qquad (18)$$

berechnet und dann

$$\text{LeftExtension} = \text{leftBorder} - \text{leftCapture} * \text{leftStep}. \qquad (19)$$

Nun können

$$pLC(\text{leftExtension}) = \text{leftBorder},$$

$$pRC(\text{leftExtension}) = \text{Wohin}(\text{leftBorder}) \text{ und}$$

$$LE\_\text{Wohin}(\text{leftExtension}) =$$

$$\text{Wohin}(\text{leftBorder}) + (\text{NrP} - \text{rightCapture} - 1)/\text{leftStep} \qquad (20)$$

gesetzt werden.

In entsprechender Weise ergeben sich rightStep, rightExtension, sowie pLC(rightExtension), pRC(rightExtension) und LE_Wohin(rightExtension) aus rightBorder. Diese Schritte sind dem erfahrenen Experten vertraut.

Abschließend wird LE_Wohin von leftExtension bis rightExtension auf -1 gesetzt, um die Rechtsverdeckung in LE_Wohin konsistent zu markieren. Dabei bezeichnet ein Wert von -1 in LE_Wohin den Pixel einer bereits vorhandenen Rechtsverdeckung und ein Wert von -2 einen neu offengelegten Pixel, welcher zu interpolieren ist. Fig. 11 zeigt verschiedene Szenarien und ihre Behandlung entsprechend der obigen Vorgehensweise.

Eine neue Rechtsverdeckung erfordert keine andere Vorgehensweise als oben beschrieben.

Im Fall einer Linksverdeckung wird bei "Bearbeitung Linksverdeckung" wie folgt vorgegangen:

Wie vorher beschrieben gilt in diesem Fall Gleichung (15). Zur Verdeutlichung verschiedener Fälle und ihre Behandlung sei auf Fig. 10 verwiesen.

Es ist in diesem Fall die linke Grenze leftBorder automatisch korrekt gesetzt ist. Hier muss also nur rightBorder nach rechts verschoben, d.h. inkrementiert, werden bis

$$\text{LeftExtension} <= \text{rightExtension} \qquad (21)$$

gilt, wobei leftExtension und rightExtension wie oben beschrieben mit Anfangswerten leftBorder := jll - 1 und rightBorder := jll berechnet werden. Nun werden pLC(rightExtension), pRC(rightExtension) und LE_Wohin(rightExtension) wie folgt berechnet:

$$pLC(\text{rightExtension}) = \text{rightBorder},$$

$$pRC(\text{rightExtension}) = \text{Wohin}(\text{rightBorder}) \text{ und}$$

$$LE\_\text{Wohin}(\text{rightExtension}) =$$

$$\text{Wohin}(\text{rightBorder}) + (\text{NrP} - \text{rightCapture} - 1)/\text{leftStep} \qquad (22)$$

Das zugehörige Flussdiagramm ist in Fig. 14 dargestellt.

Damit sind alle Kollisionsfälle der Stereobasis-Erweiterung optisch korrekt bearbeitet worden.

Falls keine Verdeckung vorliegt, hat sich die Disparität zwischen jll und jll - 1 nicht verändert. Es gilt also

$$| \text{Wohin(jll)} - \text{Wohin(jll} - 1) | = 1. \qquad (23)$$

In diesem Fall kann jllExtension sinngemäß zu (19) mit

$$\text{jllExtension} = \text{jll} - \text{leftCapture*jllStep} \qquad (24)$$

berechnet werden und pLC(jllExtension), pRC(jllExtension) sowie LE_Wohin(jllExtension) ergeben sich:

$$\text{pLC(jllExtension)} = \text{jll},$$

$$\text{pRC(jllExtension)} = \text{Wohin(jll)} \text{ und}$$

$$\text{LE\_Wohin(jllExtension)} =$$

$$\text{Wohin(jll)} + (\text{NrP} - \text{rightCapture} - 1)/\text{jllStep}, \qquad (25)$$

wobei

$$\text{jllStep} = (\text{Wohin(jll)} - \text{jll})/\text{NrSegments} \qquad (26)$$

ist.

Nachdem LE_Wohin nach Wohin übertragen wurde, ist die Disparitätskarte für die Stereobasis-Erweiterung erstellt und kann zur Synthese aller NrP Perspektiven zwischen LE und RE verwendet werden (Fig. 9).

In einer zweiten Ausführungsform kann der Erweiterungsfaktor F durch einen der Betrachter mittels einer Fernbedienung interaktiv verändert werden, sodass der Tiefeneindruck dem individuellen Empfinden der Betrachter angepasst werden kann.

In einer dritten Ausführungsform wird der Vergrößerungsfaktor F wie folgt automatisch berechnet:

Aus Untersuchungen in der Vergangenheit weiß man, dass die maximale Disparität D, der auf einem autostereoskopischen Display angezeigten Bilder, eine gewisse Grenze nicht überschreiten sollte, weil sonst das menschliche Gehirn die angezeigten Perspektiven in diesem Bereichen nicht mehr zu einem Raumbild zusammenführen kann.

Diese maximale Disparität D hängt von verschiedenen Parametern wie z.B. der Auflösung des Displays oder den optischen Eigenschaften des verwendeten optischen Elementes ab. Bei Entwurf des Displays kann daher festgelegt werden, welche maximale Disparität D nicht überschritten werden sollte. Es können Untergrenzen DU und Obergrenzen DO bestimmt werden, zwischen welchen die Disparität D der angezeigten Bilder liegen sollte, um immer einen maximalen Tiefeneindruck erzeugen zu können. Der Tiefeneindruck sollte immer möglichst groß sein, aber niemals die Obergrenze DO überschreiten.

Ist aus einem zugeführten Stereobild die maximale Disparität Dmax bekannt, so kann der Vergrößerungsfaktor F wie folgt berechnet werden:

$$F := ((\text{DO} + \text{DU})/2)/\text{Dmax}. \qquad (27)$$

Ist für das zugeführte Stereobild die maximal Disparität D nicht bekannt, so wird sie in einem Suchlauf über alle Disparitäten vorab ermittelt. Danach wird wie oben beschrieben weiter verfahren.

In einer vierten Ausführungsform wird beschrieben wie das oben darstellte Verfahren auch in eine stereoskopische Aufnahmevorrichtung integriert werden kann:

Die Stereobasis-Erweiterung lässt sich nicht nur bei der Darstellung von stereoskopischen Bildern und Bildfolgen anwenden. Ebenso ist es möglich, schon während der Aufnahme mit einer Stereokamera die Stereobasis für zwei dicht bei einander liegende Objektive zu erweitern. Dabei wird so vorgegangen, dass man die Objektive synchronisiert und in der Stereokamera z.B. durch eine speziellen Disparitätsprozessor die Disparitäten in Echtzeit ermittelt. Eine Rektifizierung, d.h. Aufnahme der Stereobilder in Stereonormalform, ist nicht erforderlich, da dies schon bei der Herstellung der Kamera durch Kalibrierung der Objektive sichergestellt werden kann. Sodann erfolgt die Stereobasis-Erweiterung mit einem Erweiterungsfaktor F unter Verwendung der aufgenommenen Perspektiven und der berechneten Disparitätskarte in Abhängigkeit von Zoom und Fokus. Dadurch wird sichergestellt, dass immer eine erweiterte Stereobasis von ca. 65mm im Bild vorhanden ist, auch wenn die Objektive z.B. nur 31mm auseinander positioniert sind. Auch über große Entfernungen herangezoomte Objekte werden so noch mit gutem Tiefeneindruck aufgenommen.

Wird die Stereokamera zusätzlich mit einem Tiefensensor versehen, so beschleunigt dies die Berechnung der Disparitätskarte wesentlich. In diesem Fall werden zwei Perspektiven und eine Tiefenkarte zur Durchführung der Stereobasis-Erweiterung verwendet.

Die in dieser Anmeldung beschriebenen Verfahren werden in einer Vorrichtung so umgesetzt, dass diese aus mindestens einer Verarbeitungseinheit besteht, welche auf mindestens eine Zeile des zugeführten Stereobildes Zugriff hat, und mindestens einer Speichereinheit, in welcher das zugeführte Stereobild, die Disparitätskarte, die beschriebenen Zeiger, sowie die Zeilen Wohin und LE_Wohin mit allen weiteren Variablen und Parametern gespeichert sind.

Idealerweise sollte es mindestens 1080 Verarbeitungseinheiten geben, um bei einem Stereobild mit HD-Auflösung alle Zeilen parallel bearbeiten zu können. Die Speichereinheiten können auch so strukturiert sein, dass es zu jeder Verarbeitungseinheit lokale Speichereinheiten gibt und zusätzlich globale Speichereinheiten, auf welche alle Verarbeitungseinheiten parallel zugreifen können.

Abschließend sei noch das Folgende bemerkt:

1. Das hier beschriebene Verfahren ist nicht auf Stereo-Einzelbilder beschränkt, sondern kann auch auf Stereo-Bildfolgen angewendet werden.

2. Als Anzeigevorrichtung können nicht nur Displays, sondern auch entsprechende Projektionssysteme verwendet werden.

3. Falls in Zukunft der Abstand KA der Kameraobjektive einmal größer gewählt werden sollte, so kann der dann gewonnene Freiheitsgrad zur Vergrößerung der Sehzonenbreite SZ verwendet werden. Eine Sehzonenbreite von 2m = 2000 mm ist für ein Wohnzimmer oder einen Präsentationsraum keine unrealistische Wunschgröße. Eine Stereobasis-Erweiterung gemäß vorgelegter Offenlegung wird damit immer noch berechtigt sein, da ein Objektivabstand KA = 2m, in der Praxis unrealistisch ist.

4. Neben der Stereobasis-Erweiterung entlang der Verlängerung der Verbindungsgeraden zwischen LC und RC können auch eine andere Form der Verlängerung gewählt werden. Dies könnte z.B., aber nicht ausschließlich, ein Kreissegment sein. In diesem Fall müssten wegen der Konsistenz der synthetisierten Perspektiven zwischen LC, RC und den rechts und links synthetisierten Erweiterungsperspektiven auch diese inneren Zwischenperspektiven auf dem zugehörigen Kreissegment erzeugt werden.

5. Wird nicht eine Disparitätskarte, sondern eine Tiefenkarte dem Verfahren zugeführt, so wird diese in einem Vorverarbeitungsschritt bei der Berechnung der Disparitätskarte verwendet und leistet dort gute Dienste zur Erhöhung der Qualität dieser Karte.

6. Nachdem die erweiterte Disparitätszeile LE_Wohin nach Wohin übertragen wurde, kann die Erzeugung der synthetischen Zwischen- und Erweiterungsperspektiven auch in der Weise erfolgen, dass immer nur diejenigen Pixel einer Zeile erzeugt werden, welche auch tatsächlich für die Darstellung auf einer autostereoskopischen Anzeigevorrichtung benötigt werden. Ein solches Verfahren ist z.B. in [6] beschrieben. Die besondere Eigenschaft dieses Verfahrens ist die Möglichkeit, eine beliebige, insbesondere beliebig große, Anzahl von Zwischen- und Erweiterungsperspektiven zu erzeugen. Wendet man das dort beschriebene Verfahren der pseudoholographischen Bildsynthese an, so kann bei bekanntem oder angenommenem Abstand KA der aufgenommenen Kameraperspektiven eine Anzahl von Perspektiven so berechnet werden, dass der maximale Abstand zwischen zwei benachbarten Perspektiven kleiner ist als eine vorgegebene Schranke $\varepsilon$. Dadurch wird das Risiko reduziert, dass das Raumbild aufgrund des zu großen Abstandes zwischen zwei benachbarten Perspektiven zerfällt.

**Referenzen**

1. Lüscher: "Grundregeln der Stereoskopie", Der Stereoskopiker, Nr. 5 vom 15.1.1931. Organ der Gesellschaft für Stereoskopie e.V.

2. Krah, C.: "Three-dimensional Display System", US7843449 B2

3. Teik, Oh et al: "3D Image Synthesis from Depth Encoded Source View", US2004/0100464

4. Huang H-C et al:"Generation of Multiviewpoint video from stereoscopic video", IEEE Transactions on Consumer Electronics, NY, US vol. 45, No. 1, Feb 1999

5. Hendrik E et al: "Real time Synthesis of digital multi viewpoint stereoscopic images", Proceedings of SPIE, SPIE, Bellingham, VA, US, Vol. 3639, Jan 1999, XP008021883

6. Kamins-Naske, S. et al: "Verfahren und Vorrichtung zur pseudoholographischen Bildsynthese", WO 2007/121970, 1.11.2007

7. Humera Noor : "Virtual Image Generation by View Extrapolation of Real Scenes", MUET Journal, 2008

8. Fogel S V: "Generation of depth images through interpolation and extrapolation of intermediate images derived from stereo images using disparity vector fields", US 5530774 A, 25 Juni 1996

9. Lang Manuel et al: "Nonlinear disparity mapping for stereoscopic 3D", ACM Transaction on graphics, Bd. 29, Nr. 4, 26. Juli 2010, Seite 1, XP055016814, ISSN: 0730-0301, DOI: 1145/1778765

**Patentansprüche**

1. Verfahren zur Erzeugung von NrP >= 2 synthetischen Perspektiven aus einem zugeführten Stereobild mit mindestens N >= 2 Perspektiven,
   wobei mindestens eine synthetische Perspektive LE in Blickrichtung der Kameras links von der linkesten zugeführten Kameraperspektive LC erzeugt wird und mindestens eine synthetische Perspektive RE in Blickrichtung der Kameras rechts von der rechtesten zugeführten Kameraperspektive RC erzeugt wird,
   in einem ersten Schritt eine Disparitätskarte Wohin
   von der linkesten zugeführten Kameraperspektive LC zur rechtesten
   zugeführten Kameraperspektive RC berechnet wird oder
   zugeführt wird,
   in einem zweiten Schritt für jede Zeile in der Disparitätskarte Wohin der zugeführten Kameraperspektiven LC und RC ein Feld pLC und ein Feld pRC, umfassend als Feldinhalt jeweils Zeiger, erzeugt werden, wobei die Feldinhalte von pLC Zeiger auf die Bildpunkte in der linkesten zugeführten Kameraperspektive LC und die Feldinhalte von pRC Zeiger auf die Bildinhalte in der rechtesten zugeführten Kameraperspektive RC sind, in einem dritten Schritt eine Disparitätskarte LE_Wohin dergestalt berechnet wird, dass für jeden Bildpunkt mit Pixelposition jll jeder Zeile der neuen Disparitätskarte LE_Wohin ein Index jllExtension berechnet wird mit

$$jllExtension = jll - leftCapture*jllStep$$

und

$$LE\_Wohin(jllExtension) = Wohin(jll) + (NrP - rightCapture - 1)/jllStep,$$

mit
LE_Wohin(jllExtension) = -1, falls es sich um eine Rechtsverdeckung handelt oder LE_Wohin(jllExtension) = -2, falls es sich um einen neu offengelegten Bildpunkt handelt,
sowie
pLC(jllExtension) = jll und,
pRC(jllExtension) = Wohin(jll)
gesetzt werden, wobei

$$jllStep = (Wohin(jll) - jll)/NrSegments$$

ist und
leftCapture die Nummer derjenigen Perspektive, bei der LC angezeigt werden soll,

rightCapture die Nummer derjenigen Perspektive bei der RC angezeigt werden soll und

NrSegments die Anzahl der Pixel pro Perspektivenschritt bei gegebener Disparität eines Pixels jll ist,

in einem vierten Schritt unter Verwendung der Disparitätskarte LE_Wohin und der Zeiger der Felder pLC und pRC auf die Bildpunkte der zugeführten Kameraperspektiven LC und RC die synthetischen Perspektiven LE und RE erzeugt werden,

für die Disparitätskarte LE_Wohin und die Disparitätskarte Wohin gilt, dass für jeden Bildpunkt der linkesten zugeführten Perspektive der Zeiger auf den korrespondierenden Bildpunkt der rechtesten zugeführten Perspektive eingetragen ist, und

wobei beide synthetischen Perspektiven LE und RE sich links und rechts auf der Verlängerung der Verbindungslinie zwischen linkster und rechtester zugeführter Kameraperspektive LC und RC befinden.

2. Verfahren nach Anspruch 1, **dadurch gekennzeichnet, dass** bei einer zugeführten Schrankes die Anzahl der zu synthetisierenden Perspektiven LE und RE so berechnet wird, dass der Abstand zwischen zwei LE und RE Kameraperspektiven bezogen auf den Abstand zwischen der linkesten zugeführten Kameraperspektive LC und der rechtesten zugeführten Kameraperspektive RC kleiner ist als die Schranke $\varepsilon$.

3. Verfahren nach einem der vorgenannten Patentansprüche, **dadurch gekennzeichnet, dass** ein Erweiterungsfaktor F so berechnet wird, dass sich der ergebende erweiterte Objektivabstand zwischen der synthetischen Perspektive LE und der synthetischen Perspektive RE innerhalb einer festgelegten Untergrenzen und einer festgelegten Obergrenzen liegt wobei

in einem ersten Schritt die maximale Disparität Dmax aus der Disparitätskarte Wohin berechnet wird und

in einem zweiten Schritt der Erweiterungsfaktor

$$F := (DO + DU)/2)/Dmax$$

festgelegt wird.

4. Verfahren nach einem der vorgenannten Patentansprüche, **dadurch gekennzeichnet, dass** in dem ersten Schritt aus den zugeführten Kameraperspektiven sowie einer zugeführten Tiefenkarte die Disparitätskarte Wohin berechnet wird.

5. Vorrichtung zur Erzeugung von NrP >= 2 synthetischen Perspektiven nach einem in mindestens einem vorgenannten Anspruch beschriebenen Verfahren bestehend aus mindestens einer Verarbeitungseinheit zur Berechnung der synthetischen Perspektiven LE und RE und der Disparitätskarte LE_Wohin und mindestens einer Speichereinheit, in welcher die Disparitätskarten Wohin und LE_Wohin, die zugeführten Kameraperspektiven LC und RC sowie die synthetischen Perspektiven LE und RE gespeichert werden.

**Claims**

1. A method for generating NrP >= 2 synthetic perspectives from a supplied stereo image with at least N >= 2 perspectives,

wherein at least one synthetic perspective LE is generated in the viewing direction of the camera to the left of the leftmost supplied camera perspective LC, and at least one synthetic perspective RE is generated in the viewing direction of the camera to the right of the rightmost supplied camera perspective RC,

in a first step, a disparity card Wohin

is calculated or supplied from the leftmost supplied camera perspective LC to the rightmost supplied camera perspective RC,

in a second step, a field pLC and a field pRC that each comprise pointers as field content are generated for each line in the disparity card Wohin of the supplied camera perspectives LC and RC, wherein the field contents of pLC are pointers to the pixels in the leftmost supplied camera perspective LC, and the field contents of pRC are pointers to the image contents in the rightmost supplied camera perspective RC,

in a third step, a disparity card LE_Wohin is calculated such that, for each pixel with

pixel position jll of each line of the new disparity card

LE_Wohin, an index jllExtension is calculated with

$$jllExtension = jll - leftCapture*jllStep$$

and

$$LE\_Wohin(jllExtension) = Wohin(jll) + (NrP - rightCapture - 1)/jllStep,$$

with

$$LE\_Wohin(jllExtension) = -1,$$

in the event of right masking
or LE_Wohin(jllExtension) = -2, in the event of a newly revealed pixel, and
pLCjllExtension) = jll and,
pRC(jllExtension) = Wohin(jll)
are set, wherein

$$jllStep = (Wohin(jll) - jll)/NrSegments$$

and
leftCapture is the number of perspectives in which LC is to be displayed rightCapture is the number of perspectives in which RC is to be displayed, and
NrSegments is the number of pixels per perspective step with a given disparity of a pixel jll,
in a fourth step, the synthetic perspectives LE and RE are generated using the disparity card LE_Wohin and the pointers of the fields pLC and pRC to the pixels of the supplied camera perspectives LC and RC,
for the disparity card LE_Wohin and the disparity card Wohin, for each pixel of the leftmostsupplied perspective there is entered the pointer to the corresponding pixel of the rightmost supplied perspective, and
wherein both synthetic perspectives LE und RE are to the left and right on the extension of the connecting line between the leftmost and rightmost supplied camera perspective LC and RC.

2. The method according to claim 1, **characterized in that**, for a supplied barrier $\varepsilon$, the number of perspectives LE and RE to be synthesized is calculated such that the distance between two LE and RE camera perspectives with reference to the distance between the leftmost supplied camera perspective LC and the rightmost supplied camera perspective RC is less than the barrier $\varepsilon$.

3. The method according to one of the aforementioned claims, **characterized in that** an expansion factor F is calculated such the resulting expanded objective distance between the synthetic perspective LE and the synthetic perspective RE lies within a set lower limit and a set upper limit, wherein
in a first step, the maximum disparity Dmax is calculated from the disparity card Wohin, and
in a second step, the expansion factor

$$F := (DO + DU)/2)/Dmax$$

is determined.

4. The method according to one of the aforementioned claims, **characterized in that** the disparity card Wohin is calculated in the first step from the supplied camera perspectives and a supplied depth card.

5. A device for generating NrP >= 2 synthetic perspectives according to a method described in at least one aforementioned claim consisting of at least one processing unit for calculating the synthetic perspectives LE and RE and the disparity card LE_Wohin and at least one memory card in which are saved the disparity cards Wohin and LE_Wohin, the supplied camera perspectives LC and RC as well as the synthetic perspectives LE and RE.

**Revendications**

1. Procédé pour la génération de NrP >= 2 perspectives de synthèse à partir d'une image stéréo alimentée avec au moins N >= 2 perspectives,

au moins une perspective de synthèse LE dans la direction de visée de la caméra étant générée à gauche de la perspective de caméra LC alimentée le plus à gauche et au moins une perspective de synthèse RE dans la direction de visée de la caméra étant générée à droite de la perspective de caméra RC alimentée le plus à droite,

dans une première étape, une carte de disparité Wohin de la perspective de caméra LC alimentée le plus à gauche à la perspective de caméra RC alimentée le plus à droite est calculée ou est alimentée

dans une deuxième étape, pour chaque rangée dans la carte de disparité Wohin des perspectives de caméra alimentées LC et RC, un champ pLC et un champ pRC, comportant des pointeurs respectifs comme contenu de champ, sont générés, les contenus de champ de pLC étant des pointeurs sur les pixels dans la perspective de caméra LC alimentée le plus à gauche et les contenus de champ de pRC étant des pointeurs sur les contenus d'image dans la perspective de caméra RC alimentée le plus à droite,

dans une troisième étape, une carte de disparité LE_Wohin est calculée de telle sorte que, pour chaque pixel avec position de pixel jll de chaque rangée de la nouvelle carte de disparité LE_Wohin, un indice jllExtension est calculé avec

$$\texttt{jllExtension = jll - leftCapture*jllStep}$$

et LE_Wohin(jllExtension) = Wohin(jll) + (NrP - rightCapture - 1)/jllStep, avec LE_Wohin(jllExtension) = -1 dans le cas où il s'agit d'un recouvrement droit ou LE_Wohin(jllExtension) = -2 dans le cas où il s'agit d'un pixel nouvellement révélé,

ainsi que

pLC(jllExtension) = jll et

pRC(jllExtension) = Wohin(jll)

où

$$\texttt{jllStep = (Wohin(jll) - jll)NrSegments et}$$

leftCapture est le numéro de perspectives pour lesquelles LC doit être montré

rightCapture est le numéro de perspectives pour lesquelles RC doit être montré, et

NrSegments est le nombre de pixels par étape de perspective dans le cas d'une disparité donnée d'un pixel jll

dans une quatrième étape, avec utilisation de la carte de disparité LE_Wohin et des pointeurs des champs pLC et pRC sur les pixels des perspectives de caméra LC et RC alimentées, les perspectives de synthèse LE et RE sont générées,

pour la carte de disparité LE_Wohin et la carte de disparité Wohin, il est entendu que pour chaque pixel de la perspective alimentée le plus à gauche le pointeur sur le pixel correspondant de la perspective alimentée le plus à droite est enregistré, et

les deux perspectives de synthèse LE et RE se trouvant à gauche et à droite sur le prolongement de la ligne de liaison entre les perspectives de caméra alimentées le plus à gauche et le plus à droite LC et RC.

2. Procédé selon la revendication 1, **caractérisé par le fait que**, pour une limite alimentée ε, le nombre de perspectives LE et RE à synthétiser est calculé de telle sorte que la distance entre deux perspectives de caméra LE et RE est inférieure à la limite ε en ce qui concerne la distance entre la perspective de caméra LC alimentée le plus à gauche et la perspective de caméra RC alimentée le plus à droite.

3. Procédé selon l'une des revendications précédentes, **caractérisé par le fait qu'**un facteur d'élargissement F est calculé de telle sorte que la distance d'objectif élargie résultante entre la perspective de synthèse LE et la perspective de synthèse RE se trouve à l'intérieur d'une limite inférieure déterminée et d'une limite supérieure déterminée, où

dans une première étape, la disparité maximale Dmax est calculée à partir de la carte de disparité Wohin et,

dans une deuxième étape, le facteur d'élargissement

$$\texttt{F := (DO+DU)/2)Dmax}$$

est déterminé.

4. Procédé selon l'une des revendications précédentes, **caractérisé par le fait que**, dans la première étape, la carte de disparité Wohin est calculée à partir des perspectives de caméra alimentées ainsi que d'une carte de profondeur alimentée.

5. Procédé pour la génération de NrP >= 2 perspectives de synthèse selon un procédé décrit dans au moins une revendication précédente, se composant d'au moins une unité de traitement pour le calcul des perspectives de synthèse LE et RE et de la carte de disparité LE_Wohin et d'au moins une unité de mémoire dans laquelle les cartes de disparité Wohin et LE_Wohin, les perspectives de caméra alimentées LC et RC ainsi que les perspectives de synthèse LE et RE sont mises en mémoire.

Fig. 1

Fig. 2

Fig. 3

Fig. 4

RV3    RV2

PO3    PO2    PO1    PO2    PO3

LC

RC

PO3  PO2    PO1    PO2    PO3

LV2    LV2

Fig. 5

Fig. 6

Fig. 7

Fig. 8

Fig. 9

Fig. 10

Fig. 11

Fig. 12

Fig.
13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7843449 B2
- US 20040100464 A
- WO 2007121970 A
- US 5530774 A


**In der Beschreibung aufgeführte Nicht-Patentliteratur**

- **LÜSCHER.** Grundregeln der Stereoskopie. *Der Stereoskopiker,* 15. Januar 1931
- **HUANG H-C et al.** Generation of Multiviewpoint video from stereoscopic video. *IEEE Transactions on Consumer Electronics,* Februar 1999, vol. 45 (1
- **HENDRIK E et al.** Real time Synthesis of digital multi viewpoint stereoscopic images. *Proceedings of SPIE, SPIE, Bellingham,* Januar 1999, vol. 3639
- **HUMERA NOOR.** Virtual Image Generation by View Extrapolation of Real Scenes. *MUET Journal,* 2008
- **FOGEL S V.** *Generation of depth images through interpolation and extrapolation of intermediate images derived from stereo images using disparity vector fields*
- **LANG MANUEL et al.** Nonlinear disparity mapping for stereoscopic 3D. *ACM Transaction on graphics,* 26. Juli 2010, vol. 29 (4), ISSN 0730-0301, 1